# FASCICULE DE BREVET EUROPEEN

(11) **EP 0 410 888 B1**
(45) Date de publication et mention de la délivrance du brevet: **11.12.1996**
(21) Numéro de dépôt: 90402148.2
(22) Date de dépôt: 25.07.1990
(51) Int. Cl.: C08K 5/00, C08L 53/02, C08L 21/00

(54) **Caoutchouc thermoplastique à caractéristiques améliorées et procédé pour sa fabrication**
Thermoplastischer Kautschuk mit verbesserten Eigenschaften, und Verfahren zu dessen Herstellung
Thermoplastic rubber with improved characteristics and process for its preparation

(30) Priorité: 25.07.1989 FR 8910005
(43) Date de publication de la demande: 30.01.1991
(73) Titulaire: THERMOPLASTIQUES COUSIN TESSIER, 85130 Tiffauges (FR)
(72) Inventeur: Grelet, Jean-Louis, F-85130 Saint Martin des Tilleuls (FR)
(74) Mandataire: Degret, Jacques

(56) Documents cités:
- EP-A- 0 318 614
- FR-A- 2 335 555
- GB-A- 2 011 430
- US-A- 4 350 795

## Description

La présente invention est relative à un caoutchouc thermoplastique à caractéristiques améliorées, permettant notamment l'obtention de basses duretés Shore A, et présentant par suite un caractère caoutchoutique très prononcé. La présente invention concerne également un procédé pour la fabrication d'un tel caoutchouc thermoplastique.

En matière de produits caoutchoutiques, il est désormais conventionnel de les particulariser par leur caractéristique de dureté, cette dernière étant en relation directe avec le module élastique et la souplesse du matériau.

La mesure de la dureté qui est une mesure statique-permet donc d'apprécier, voire de mesurer, commodément et rapidement le module d'allongement du matériau caoutchoutique concerné.

Actuellement, deux méthodes sont préconisées pour pratiquer la mesure de la dureté d'un matériau caoutchoutique, méthodes qui toutes deux ont en commun de contrôler l'enfoncement d'un poinçon actionné par un ressort, ou par un poids, à la surface d'un échantillon du caoutchouc à contrôler ; le poinçon et le ressort ou le poids qui provoque le déplacement dudit poinçon appartiennent à un appareil dénommé "duromètre" qui comprend également un dispositif composé d'un cadran à graduations et d'une aiguille mobile en regard de ce cadran pour la lecture simple et rapide de l'enfoncement du poinçon dans l'échantillon de caoutchouc, traduit en degrés de dureté. La première méthode utilise un poinçon tronconique, dont la pointe est coupée de sorte à présenter un méplat, tandis que la seconde méthode utilise un poinçon conique, c'est-à-dire une pointe acérée. La première méthode donne des valeurs de dureté traduites en Shore A et elle est utilisée essentiellement pour les caoutchoucs souples, tandis que la seconde méthode donne des valeurs de dureté traduites en Shore D et est utilisée essentiellement pour les caoutchoucs durs.

En matière de dureté Shore A, il est d'usage pour les fabricants et les utilisateurs des matériaux caoutchoutiques de prendre comme valeur repère une dureté de 60 Shore A, étant entendu qu'en-dessous de cette valeur on considère que le produit est "souple" tandis que au-dessus de cette valeur on considère que le produit est "dur".

Pour exemple, les caoutchoucs traditionnels ont des valeurs de dureté Shore A comprises entre 50 et 70. Il existe donc des caoutchoucs traditionnels souples et des caoutchoucs traditionnels durs.

A l'inverse, les caoutchoucs thermoplastiques actuellement commercialisés ont une dureté Shore A rarement inférieure à 70.

Les caoutchoucs thermoplastiques existants peuvent être classés en trois familles :
a) les élastomères formés chacun par un enchaînement de blocs de segments rigides et de segments souples, cette famille comprenant le Styrène-Butadiène-Styrène (SBS), le Styrène-Ethylène-Butylène-Styrène (SEBS), le Polyuréthane thermoplastique (TPU), le Polyester thermoplastique et le Polyamide thermoplastique ;
b) les élastomères associant chacun une résine thermoplastique et au moins un caoutchouc traditionnel, dispersé finement dans la phase thermoplastique et éventuellement vulcanisé in situ, famille pour laquelle l'élément thermoplastique est donc une résine et à laquelle appartiennent par exemple :
   - le mélange d'une résine de polyoléfine thermoplastique, choisie parmi le Polypropylène et le Polyéthylène, et d'un caoutchouc diénique vulcanisé, choisi notamment parmi le caoutchouc naturel et le Polybutadiène, tel celui décrit dans le brevet FR-A-2.355.555,
   - le mélange de Polypropylène et d'Ethylène-Propylène-Diène monomère (EPDM) vulcanisé, tels celui décrit dans le brevet FR-A-2.408.632 et celui commercialisé par Monsanto sous l'appellation "Santoprène",
   - le mélange de Polyamide et de Butadiène-Nitrile-Acrylique (NBR) vulcanisé, tel celui commercialisé par Monsanto sous l'appellation "Geolast",
   - le mélange de trois constituants : une résine de polyoléfine thermoplastique, choisie parmi le Polypropylène et le Polyéthylène ; un caoutchouc de copolymère de monooléfines, choisi notamment parmi l'Ethylène-Propylène monomère (EPM) et l'Ethylène-Propylène-Diène monomère (EPDM), constituant le premier caoutchouc traditionnel vulcanisé ; et un second caoutchouc traditionnel à diène conjugué, choisi notamment parmi le Polyisoprène, le Polybutadiène et le Polychloroprène. Ce mélange est plus particulièrement décrit dans le brevet GB-A-2.011.430,
   - le mélange de trois constituants : une résine de polyoléfine thermoplastique, choisie parmi le Polypropylène ou accessoirement le Polyéthylène ; un caoutchouc traditionnel constitué par le Styrène-Butadiène-Rubber (SBR), alors seulement partiellement vulcanisé ; et un caoutchouc hautement saturé, choisi parmi les caoutchoucs traditionnels, ou parmi les copolymères de Styrène-Butadiène-Styrène hydrogénés. Ce mélange est plus particulièrement décrit dans le brevet US-A-4.350.795. Dans ce mélange, comme d'ailleurs dans tous ceux illustrants les caoutchoucs thermoplastiques de cette famille b), l'élément thermoplastique est toujours constitué par la résine (Polypropylène, Polyéthylène, Polyamide). On sait par ailleurs que l'élément thermoplastique est un matériau très dur et très rigide. De plus, dans cet exemple précis, l'élément thermoplastique est introduit en quantité au moins égale au caoutchouc hautement saturé, démontrant par là que l'on ne cherche alors pas à obtenir un produit souple. Il en résulte que l'élastomère thermoplastique ainsi obtenu est d'une dureté Shore A voisine de 90, caractéristique qui se trouve confirmée par les applications (domaine automobile, et en particulier pare-chocs) pour lesquelles ledit élastomère thermoplastique est avantageusement proposé,
c) les élastomères rétifiés à l'aide de liaison ionique.

Les Polyuréthanes, les Polyesters et les Polyamides de la famille a), du moins ceux qui sont commercialisés, ont tous une dureté Shore A supérieure à 70. Par exception, les SBS et SEBS de cette famille a) permettent d'obtenir des duretés Shore A inférieures à 60, mais malheureusement, sous contrainte (compression ou allongement), ces matériaux présentent un fluage important, fluage qui au surplus s'aggrave au fur et à mesure que la température s'élève ; l'inconvénient de ce phénomène de fluage est que les matériaux perdent leur caractère caoutchoutique et deviennent des plastiques purs ; par suite, les élastomères SBS et SEBS en question sont d'un emploi limité aux produits utilisables normalement à température ordinaire (industrie de la chaussure, industrie des adhésifs, modification des bitumes des terrasses et des routes, pour leur donner de la souplesse) et en tout état de cause ils sont inaptes pour toutes les applications aux produits appelés à être utilisés à des températures d'au moins 70 °C.

Avec les élastomères thermoplastiques de la famille b), le fluage sous contrainte est très limité et se rapproche de celui des caoutchoucs traditionnels vulcanisés ; ces élastomères conservent ainsi leurs propriétés jusqu'à des températures de l'ordre de 130 à 150°C et ils peuvent donc être utilisés dans les industries de l'automobile et de l'électroménager ; toutefois, ces élastomères ont pour inconvénient d'exiger pour leur mise en oeuvre des quantités importantes de résine thermoplastique dure (Polypropylène, Polyamide), cela pour bien mélanger les petits nodules de caoutchouc (EPDM, NBR), et ces fortes quantités relatives de résine rendent difficile l'obtention d'élastomères thermoplastiques de dureté inférieure à 70 Shore A tout en conservant une grande fluidité nécessaire à une bonne mise en oeuvre selon le procédé d'injection. De ce fait, tous les caoutchoucs thermoplastiques de la famille b) sont en réalité des caoutchoucs durs, raides, présentant un module d'élasticité élevé.

Les élastomères thermoplastiques de la famille c) ont le même inconvénient d'être des produits raides, à module d'élasticité élevé. En effet, tous ces élastomères, du moins ceux qui sont actuellement commercialisés, ont une dureté d'au moins 80 Shore A.

En résumé, les SBS et SEBS sont les seuls élastomères thermoplastiques véritablement souples, permettant d'obtenir une dureté inférieure à 60 Shore A, mais malheureusement ces produits à caractère caoutchoutique prononcé sont d'un emploi très limité et, notamment, ils sont inaptes pour toutes les applications dans lesquelles le produit caoutchoutique peut être soumis à des contraintes et/ou peut être porté à une température de l'ordre de 70°C.

La présente invention a pour but de fournir un caoutchouc thermoplastique qui permet d'obtenir une dureté inférieure à 60 Shore A et qui, dans le même temps, est insensible aux effets de la température et présente un fluage très limité sous contrainte. A cette fin, la présente invention préconise d'associer par mélangeage une matrice thermoplastique souple, choisie préférentiellement parmi les caoutchoucs thermoplastiques de la famille a), et un caoutchouc traditionnel ou un caoutchouc thermoplastique, choisi également de préférence parmi les caoutchoucs de la famille a) et de nature alors différente de celle de la matrice, et de vulcaniser cet autre caoutchouc traditionnel ou thermoplastique à l'intérieur de la matrice thermoplastique, sans vulcaniser cette dernière.

Dans ce mélange final, rétifié pour partie par un choix approprié de l'agent de vulcanisation, la matrice thermoplastique souple non vulcanisée représente la phase plastique du mélange, en étant notamment sensible à la température, tandis que le caoutchouc traditionnel ou thermoplastique vulcanisé constitue la phase caoutchoutique non sensible à la température. On obtient donc un caoutchouc thermoplastique à caractéristiques améliorées, la phase rétifiée in situ dans la matrice thermoplastique souple n'affaiblissant pas la thermoplasticité de cette matrice et à l'inverse améliorant le conportement caoutchoutique du mélange lorsque la température d'utilisation de ce dernier se rapproche du point de ramollissement de la matrice souple de départ constituant la phase plastique.

La présente invention a donc pour premier objet un caoutchouc thermoplastique à caractéristiques améliorées, obtenu par mélange de deux caoutchoucs dont l'un est un caoutchouc thermoplastique, caractérisé en ce que ledit caoutchouc thermoplastique est choisi dans le groupe composé du Styrène-Butadiène-Styrène, du Styrène-Ethylène-Butylène-Styrène, du Polyuréthane thermoplastique, du Polyester thermoplastique et du Polyamide thermoplastique, et en ce que le second caoutchouc est soit un caoutchouc traditionnel, soit un second caoutchouc thermoplastique choisi dans le groupe précité, mais alors de nature différente de celle du premier caoutchouc thermoplastique (pour pouvoir être vulcanisé alors que le premier caoutchouc ne le sera pas), le caoutchouc traditionnel ou le second caoutchouc thermoplastique associé au premier caoutchouc thermoplastique, compatible ou rendu compatible (par association à d'autres ingrédients) avec ledit premier caoutchouc thermoplastique, ayant été finement dispersé dans ce premier caoutchouc thermoplastique et ayant été vulcanisé in situ à l'aide d'un agent de vulcanisation inactif vis-à-vis dudit premier caoutchouc thermoplastique.

Dans une réalisation préférentielle, le caoutchouc thermoplastique selon l'invention comprend en mélange un premier caoutchouc thermoplastique, choisi dans le groupe composé du Styrène-Ethylène-Butylène-Styrène, du Polyuréthane thermoplastique, du Polyester thermoplastique et du Polyamide thermoplastique, et soit un caoutchouc traditionnel, soit un Styrène-Butadiène-Styrène, le caoutchouc traditionnel ou le Styrène-Butadiène-Styrène ayant été finement dispersé dans le premier caoutchouc thermoplastique puis vulcanisé in situ à l'aide d'un agent de vulcanisation inactif vis-à-vis dudit premier caoutchouc thermoplastique.

Le caoutchouc traditionnel, éventuellement mélangé au premier caoutchouc thermoplastique, peut par exemple être choisi dans le groupe composé du caoutchouc naturel, du Styrène-Butadiène, du Polybutadiène, de l'Ethylène-Propylène, du Polychloroprène, du Polyéthylène chlorosulfoné, du caoutchouc Nitrile ou Butadiène-Nitrile-Acrylique, du Polyéthylène chloré, de l'Ethylène-Propylène-Diène monomère, des caoutchoucs acryliques et des polymères fluorés.

Les quantités de caoutchoucs pouvant être le plus couramment mélangées sont de 20 à 80 parties en poids du premier caoutchouc thermoplastique non vulcanisé et de 80 à 20 parties en poids de caoutchouc traditionnel vulcanisé ou du second caoutchouc thermoplastique vulcanisé pour 100 parties en poids au total de caoutchouc.

Lorsque le caoutchouc mélangé au premier caoutchouc thermoplastique est du Styrène-Butadiène-Styrène ou du Styrène-Butadiène Rubber, l'agent de vulcanisation dudit Styrène-Butadiène-Styrène ou dudit Styrène-Butadiène Rubber est préférentiellement du 1.3-bis (tert. butyl peroxy isopropryl) benzène. Avantageusement, un activateur tel le triallylcyanurate est alors associé à cet agent de vulcanisation.

Le caoutchouc thermoplastique selon l'invention peut également comprendre une charge renforçante, tel le polypropylène pour le premier caoutchouc thermoplastique, de la silice pour le caoutchouc traditionnel et une résine telle une résine alpha méthylstyrène pour le second caoutchouc thermoplastique.

Naturellement, la présente invention a également pour objet un procédé de fabrication d'un caoutchouc thermoplastique à caractéristiques améliorées, obtenu par mélangeage de deux caoutchoucs dont l'un est un caoutchouc thermoplastique, caractérisé en ce que l'on mélange un premier caoutchouc thermoplastique choisi dans le groupe composé du Styrène-Butadiène-Styrène, du Styrène-Ethylène-Butylène-Styrène, du Polyuréthane thermoplastique, du Polyester thermoplastique et du Polyamide thermoplastique, avec soit un caoutchouc traditionnel, soit un second caoutchouc thermoplastique choisi dans le groupe précité mais alors de nature différente de celle du premier caoutchouc thermoplastique, en ce que l'on disperse finement ledit caoutchouc traditionnel ou ledit second caoutchouc thermoplastique dans le premier caoutchouc thermoplastique et en ce que l'on vulcanise in situ ledit caoutchouc traditionnel ou ledit second caoutchouc thermoplastique à l'aide d'un agent de vulcanisation inactif vis-à-vis du premier caoutchouc thermoplastique.

Pour mieux faire comprendre les objets de la présente invention, on va décrire ci-après, à titre purement illustratifs et non limitatifs, diverses compositions de caoutchoucs thermoplastiques permettant d'obtenir des duretés inférieures à 60 Shore A, ainsi que les moyens mis en oeuvre pour réaliser ces caoutchoucs thermoplastiques.

Pour premier exemple, on constitue un alliage de Styrène-Ethylène-Butylène-Styrène, caoutchouc thermoplastique, et de Styrène-Butadiène-Styrène, autre caoutchouc thermoplastique.

On réalise tout d'abord séparément les deux compositions, à base de Styrène-Ethylène-Butylène-Styrène (SEBS) d'une part, et à base de Styrène-Butadiène-Styrène (SBS) d'autre part, répondant aux formulations suivantes :

| Formule n° 1 | | Formule n° 2 | |
|---|---|---|---|
| SEBS | 100 | SBS | 100 |
| Plastifiant | 110 | Plastifiant | 80 |
| Polypropylène | 30 | Résine alpha méthylstyrène | 30 |
| Antioxydant | 0,2 | Antioxydant | 0,2 |
| Antichaleur | 0,4 | Antichaleur | 0,4 |

dans lesquelles :
- pour la formule n° 1 : le SEBS est un Styrène-Ethylène-Butylène-Styrène commercialisé par Shell sous l'appellation "Kraton G 1651" ; le plastifiant est une huile paraffinique, par exemple de type "Codex" de volatilité inférieure à 10 % à 200°C et qui, suivant sa quantité, permet d'ajuster la dureté finale du mélange ; le polypropylène, qui sert d'agent de mise en oeuvre du SEBS, c'est-à-dire de charge renforçante, est le polypropylène homopolymère isotactique de grade 5 commercialisé par Shell ; l'antioxydant est "l'Irganox 1010" commercialisé par Ciba et l'agent antichaleur est le dilauryl thiodipropionate DLTDP commercialisé par Ciba ;
- pour la formule n° 2 : le SBS est un styrène-butadiène-styrène commercialisé par Fina sous l'appellation "Finaprène 411" ; le plastifiant est également une huile paraffinique, par exemple de même type "Codex" de volatilité inférieure à 10 % à 200°C ; la résine alpha méthylstyrène, charge renforçante du SBS, est une résine de type "18-290" commercialisée par Amoco ; les agents antioxydant et antichaleur sont les mêmes que ceux utilisés dans la composition à base de SEBS.

Pour chaque formulation, tous les ingrédients sont introduits ensemble dans un mélangeur à rubans, jusqu'à par suite obtention de deux mélanges secs séparés. Chaque mélange est ensuite introduit dans une extrudeuse à double vis, équipée par exemple de cames de malaxage, qui délivre un mélange homogène des ingrédients, tant pour la composition répondant à la formule n° 1, d'une part, que pour la composition répondant à la formule n° 2, d'autre part.

La température de mélangeage est de 200°C pour la formule n° 1, et de préférence de 180°C pour la formule n° 2.

Avantageusement, l'extrudeuse est également équipée d'un système de granulation qui permet d'obtenir chacun des deux mélanges finals sous forme de granulés. Le temps de séjour des composants de chaque mélange en cours de réalisation dans ladite extrudeuse est d'environ 2 minutes.

Les éprouvettes servant à la détermination des propriétés mécaniques de chaque mélange ainsi réalisé sont découpées à l'emporte-pièce dans des plaques injectées.

Les propriétés mécaniques de chacune des deux compositions, après mélangeage de leurs composants respectifs, sont les suivantes :

| | Formule n° 1 | Formule n° 2 |
|---|---|---|
| Dureté Shore A | 55 | 35 |
| Force à la rupture MPa | 5,2 | 10,0 |
| Allongement à la rupture % | 600 | 1000 |
| DRC %, à 70°C, 22 heures | 45 | 85 |
| DRC %, à 100°C, 22 heures | 70 | 100 |
| DRC %, à 125°C, 22 heures | 85 | 100 |

La dureté shore A a été mesurée en appliquant la norme ISO R 1183, la force à la rupture a été mesurée en appliquant la norme ISO 37, l'allongement à la rupture a été mesuré en appliquant également la norme ISO 37 et enfin la DRC -déformation rémanente à la compression- a été mesurée en appliquant la méthode B de la norme ISO R 815.

Complémentairement à la réalisation des deux compositions correspondant aux formules n° 1 et n° 2, lesquelles sont dépourvues de tout système chimique capable de rétifier le SBS et/ou le SEBS, on réalise huit autres mélanges, quatre répondant à la formule n° 1 et quatre répondant à la formule n° 2, en ajoutant à chacune desdites deux formules chacun des quatre systèmes chimiques "rétifiants" (ou encore appelés "réticulants" ou "vulcanisants") suivants :

| | | | |
|---|---|---|---|
| (1) Soufre | 2,0 | (2) Soufre | 0,5 |
| MBTS | 1,0 | DTMT | 2,0 |
| DOTG | 0,3 | MBTS | 1,0 |
| ZnO | 3,0 | DOTG | 0,3 |
| Stéarine | 2,0 | ZnO | 3,0 |
| | | Stéarine | 2,0 |
| | | | |
| (3) Peroxyde | 1,2 | (4) Résine phénolique | 8,0 |
| T.A.C. | 0,6 | ZnO | 3,0 |

dans lesquels les quantités des composants sont exprimées en parties pour 100 de SEBS, et respectivement de SBS, et dans lesquels : le soufre est du soufre maille 200 ; MBTS est du sulfure de mercaptobenzothiazyle ; DOTG est la diorthotolyl guanidine ; la stéarine est de l'acide stéarique ; DTMT est le disulfure de tétraméthylthiurame ; le peroxyde est un 1.3-bis (tert. butyl peroxy isopropyl) benzène, commercialisé par Akzo sous l'appellation "Perkadox 14/40", produit qui est un agent de vulcanisation du SBS ; T.A.C. est un triallylcyanurate, agent activateur généralement associé au Perkadox ; et la résine phénolique est celle commercialisée par Schenectady sous l'appellation "SP 1056".

Les huit mélanges précités sont préparés de la façon qui a été exposée à propos des deux premières formules, respectivement n° 1 et n° 2, desquelles, on se souvient, se trouvait exclu tout produit pouvant réticuler le SEBS et/ou le SBS.

A l'inverse, dans les huit nouvelles formules, on trouve toujours présent un système chimique capable de créer des liaisons à partir des doubles liaisons carbone-carbone contenues dans le polybutadiène, donc capable de réticuler le SBS. Le soufre, et respectivement le peroxyde et la résine phénolique sont les agents spécifiques de cette réticulation. Ces agents sont en revanche en principe inactifs vis-à-vis du SEBS, c'est-à-dire qu'ils ne provoquent aucune rétification de sa masse.

D'ailleurs, on constate que la plasticité des échantillons des compositions de SEBS correspondant à la formule n° 1 additionnée des systèmes de réticulation 1 à 4 est identique à la plasticité de la composition répondant à la formule n° 1 déjà expérimentée. Il s'en déduit que les différents systèmes de réticulation en question sont réellement inefficaces sur la composition de la formule n° 1 et que le SEBS n'est pas rétifié. Un test complémentaire par des mesures de DRC confirme que ces valeurs sont inchangées, et que le SEBS n'est effectivement pas réticulé.

A l'inverse, en faisant agir dans les mêmes conditions les systèmes de réticulation 1 à 4 sur la formule n° 2, on obtient relativement à la formule n° 2 déjà expérimentée une diminution de la plasticité, suivie d'une transformation en poudre du mélange. La composition répondant à la formule n° 2 a perdu toute plasticité à la suite de la rétification du SBS.

En conclusion des expérimentations conduites ainsi qu'il vient d'être décrit, on sait qu'il existe ainsi des systèmes chimiques capables de vulcaniser le SBS et en revanche inactifs vis-à-vis du SEBS.

Les quatre systèmes chimiques précités ont ensuite été examinés sur plusieurs mélanges alliant le SEBS et le SBS, aux fins de confirmer les conclusions qui précèdent et aux fins également de déterminer la meilleure des quatre compositions rétifiantes.

Ainsi, on réalise tout d'abord dans une extrudeuse à double vis un mélange homogène des ingrédients correspondant à la formulation suivante :

| Formule n° 3 | |
|---|---|
| SEBS | 50 |
| SBS | 50 |
| Plastifiant | 95 |
| Résine alpha méthylstyrène | 15 |
| Polypropylène | 15 |
| Antioxydant | 0,2 |
| Antichaleur | 0,4 |

Ce mélange est réalisé à 200°C, cette température bien que moins pratique pour mélanger le SBS n'affectant toutefois pas ce dernier.

A quatre prises du mélange correspondant à la formule n° 3, on incorpore les quatre systèmes chimiques aptes à rétifier le SBS et parallèlement inactifs vis-à-vis du SEBS. L'incorporation de ces systèmes rétifiants ainsi que la rétification du SBS se font lors d'un deuxième passage en extrudeuse, à la même température de 200°C, et dans les mêmes conditions que celles qui ont été vues précédemment. Ces conditions seront d'ailleurs les mêmes pour la mise en oeuvre de tous les mélanges qui suivront.

Les éprouvettes découpées dans le mélange correspondant à la formule n° 3 et dans les quatre mélanges, respectivement 3.1, 3.2, 3.3. et 3.4, répondant à cette formule complétée d'un système de rétification repéré par le même chiffre en page 8 conduisent, après mesures, aux résultats suivants :

| | Formule N° 3 | 3.1 | 3.2 | 3.3 | 3.4. |
|---|---|---|---|---|---|
| | (sans rétifiant) | | | | |
| Dureté Shore A | 45 | 50 | 50 | 52 | 51 |
| Force à la rupture MPa | 6,0 | 5,0 | 4,2 | 3,8 | 4,6 |
| Allongement à la rupture % | 800 | 550 | 380 | 340 | 450 |
| DRC %, à 70°C, 22 heures | 70 | 61 | 55 | 37 | 55 |
| DRC %, à 100°C, 22 heures | 94 | 73 | 63 | 48 | 71 |
| DRC %, à 125°C, 22 heures | 100 | 98 | 88 | 58 | 92 |

On constate que, relativement à la composition répondant à la formule n° 3 qui ne comporte aucun agent de réticulation, les quatre systèmes rétifiants repérés (1) à (4) améliorent notablement les valeurs de DRC, notamment le système chimique (3) qui associe le "Perkadox 14/40" et le triallylcyanurate et grâce auquel les caractéristiques mécaniques obtenues approchent très sensiblement celles que possèdent les caoutchoucs traditionnels. C'est donc le système chimique alliant le "Perkadox 14/40" et le triallylcyanurate qui va être retenu pour la suite de cette description.

Ainsi, à quatre prises de la composition correspondant à la formule n° 3, on incorpore un système rétifiant peroxyde-triallylcyanurate, dans les quantités respectives suivantes :

| | | | | |
|---|---|---|---|---|
| Peroxyde "Perkadox 14/40" | 0,4 | 0,6 | 0,8 | 1,0 |
| T.A.C. | 0,2 | 0,3 | 0,4 | 0,5 |

Les essais mécaniques effectués sur les quatre mélanges rétifiés qui précèdent ont conduit aux résultats suivants :

| | | | | |
|---|---|---|---|---|
| Dureté Shore A | 50 | 52 | 53 | 53 |
| Force à la rupture MPa | 4,2 | 3,8 | 3,6 | 3,4 |
| Allongement à la rupture % | 400 | 340 | 300 | 270 |
| DRC %, à 100°C, 22 heures | 51 | 48 | 46 | 45 |

Pour la suite de cette étude, la formule comprenant 0,8 partie de peroxyde et 0,4 partie de T.A.C. a été sélectionnée puisqu'il est constaté que la DRC varie alors peu, même si les quantités d'agent de réticulation augmentent.

Après avoir optimisé la quantité du système rétifiant (3) à ajouter à la formule n° 3, on a aussi cherché à optimiser le rapport SEBS/SBS.

Il a été ainsi réalisé cinq mélanges répondant aux formules n° 4 à 8 suivantes :

| | n° 4 | n° 5 | n° 6 | n° 7 | n° 8 |
|---|---|---|---|---|---|
| SEBS | 70 | 60 | 50 | 40 | 30 |
| SBS | 30 | 40 | 50 | 60 | 70 |
| Plastifiant | 101 | 98 | 95 | 92 | 89 |
| Résine alpha méthylstyrène | 9 | 12 | 15 | 18 | 21 |
| Polypropylène | 21 | 18 | 15 | 12 | 9 |
| Antioxydant | 0,2 | 0,2 | 0,2 | 0,2 | 0,2 |
| Antichaleur | 0,4 | 0,4 | 0,4 | 0,4 | 0,4 |
| Peroxyde | 0,48 | 0,64 | 0,8 | 0,96 | 1,12 |
| T.A.C. | 0,24 | 0,32 | 0,4 | 0,48 | 0,56 |

mélanges qui, après essais, ont fourni les résultats suivants :

| | n° 4 | n° 5 | n° 6 | n° 7 | n° 8 |
|---|---|---|---|---|---|
| Dureté Shore A | 55 | 54 | 53 | 52 | 51 |
| Force à la rupture MPa | 3,2 | 3,9 | 3,6 | 3,4 | 3,0 |
| Allongement à la rupture % | 440 | 380 | 300 | 270 | 230 |
| DRC %, à 100°C, 22 heures | 58 | 52 | 46 | 42 | 40 |

Lors de leur mise en oeuvre, le comportement des mélanges correspondant aux formules n° 4 à 8 a été le suivant :
- au cours de l'extrusion : l'extrusion en filière plate d'une bande de 20 millimètres de large et de 0,8 millimètre d'épaisseur donne un aspect lisse avec les formules 4, 5 et 6, un aspect rugueux avec la formule 7, et un aspect bosselé avec la formule 8,
- au cours de l'injection : les formules 4 à 7 permettent d'obtenir des plaques lisses, sans défaut de surface, la formule n° 8 donnant en revanche des défauts d'aspect dûs à un manque de plasticité.

Les formules n° 4, n° 5 et n° 6 apparaissent donc être les formules préférentielles. Toutefois, si l'on prend en compte les valeurs de dureté Shore A et de DRC obtenues, la formule la plus intéressante est celle représentée par la formule n° 6 dans laquelle le rapport SEBS/SBS est égal à 1.

Pour second exemple de réalisation de l'invention, on constitue un alliage de SEBS et de styrène-butadiène (SBR) qui est un caoutchouc traditionnel.

On réalise tout d'abord séparément les deux compositions, à base de SEBS d'une part, et à base de SBR d'autre part, répondant aux formulations suivantes :

| Formule n° 1 | | Formule n° 9 | |
|---|---|---|---|
| SEBS | 100 | SBR | 100 |
| Plastifiant | 110 | Silice | 40 |
| Polypropylène | 30 | Plastifiant | 10 |
| Antioxydant | 0,2 | Diéthylèneglycol | 1,5 |
| Antichaleur | 0,4 | Antioxydant | 0,4 |
| | | ZnO | 5,0 |
| | | Stéarine | 2,0 |
| | | MBTS | 1,0 |
| | | DOTG | 0,3 |
| | | Soufre | 2,0 |

dans lesquelles :
- pour la formule n° 1 : il y a totale identité avec celle donnée en premier exemple,
- pour la formule n° 9 : le SBR est un styrène-butadiène-rubber commercialisé par Calatrava sous l'appellation "Calprène 1206" et la silice, charge renforçante de ce SBR, est celle commercialisée par Rhone-Poulenc sous l'appellation "Zeosil 175".

Les propriétés mécaniques de chacune de ces deux compositions, après mélangeage de leurs composants respectifs, et vulcanisation pendant 10 minutes à 155°C pour ce qui concerne le mélange répondant à la formule n° 9, sont les suivantes:

| | Formule n° 1 | Formule n° 9 |
|---|---|---|
| Dureté Shore A | 55 | 54 |
| Force à la rupture MPa | 5,2 | 11 |
| Allongement à la rupture % | 600 | 650 |
| DRC %, à 100°C, 22 heures | 70 | 42 |

Aux fins de démontrer les avantages résultant de la mise en oeuvre du caoutchouc thermoplastique proposé par la présente invention, consistant en seconde solution à allier un caoutchouc thermoplastique (SEBS) et un caoutchouc traditionnel (SBR), on a réalisé deux nouveaux mélanges répondant aux formulations suivantes :

| Formule 10 | | Formule n° 11 | |
|---|---|---|---|
| SEBS | 50 | SEBS | 50 |
| SBR | 50 | SBR | 50 |
| Plastifiant | 80 | Plastifiant | 80 |
| Polypropylène | 15 | Polypropylène | 15 |
| Antioxydant | 0,2 | Antioxydant | 0,2 |
| Antichaleur | 0,4 | Antichaleur | 0,4 |
| | | "Perkadox 14/40" | 0,8 |
| | | T.A.C. | 0,4 |

mélanges qui, après essais, ont fourni les résultats suivants :

| | Formule n° 6 | Formule n° 10 | Formule n° 11 |
|---|---|---|---|
| | (rappel) | | |
| Dureté Shore A | 53 | 36 | 51 |
| Force à la rupture MPa | 3,6 | 3,2 | 2,9 |
| Allongement à la rupture % | 300 | 600 | 360 |
| DRC %, à 100°C, 22 heures | 46 | 91 | 51 |

Par simple comparaison des résultats qui précèdent, on observe en premier lieu que les propriétés mécaniques et la DRC obtenues avec le mélange SEBS-SBR de la formule n° 11 sont voisines de celles obtenues avec l'alliage SEBS- SBS de la formule n° 6. Les duretés Shore A sont nettement inférieures à 60, ce qui permet de placer les caoutchoucs thermoplastiques ainsi réalisés dans la catégorie des produits souples.

On constate également que, par vulcanisation du SBR selon le système peroxyde-T.A.C. préconisé selon la formule n° 11, on obtient une valeur d'allongement à la rupture nettement abaissée, ce qui indique que l'on a éliminé le phénomène de fluage. Cette observation vaut d'ailleurs également pour le premier exemple, les caractéristiques d'allongement à la rupture du SEBS et du SBS, considérés individuellement, étant notablement abaissées par la réalisation des mélanges SEBS-SBS dans lesquels le SBS est réticulé par le peroxyde "Perkadox 14/40". On passe en effet des valeurs de 600 pour le SEBS, et respectivement de 1000 pour le SBS, et de 800 pour le mélange SEBS-SBS non rétifié, à des valeurs de l'ordre de 270 à 400 lorsque, dans le mélange SEBS-SBS, le SBS est rétifié.

Au plan de sa mise en oeuvre, il est à noter que le comportement de la composition répondant à la formule n° 11 est sensiblement identique à celui de la composition correspondant à la formule n° 6, à savoir qu'elle est d'un aspect lisse aussi bien en extrusion qu'en injection.

Des études qui précèdent, qui ont porté sur la rétification in situ du SBS dans un alliage de SEBS et de SBS, ou du SBR dans un alliage de SEBS et de SBR, on conclut qu'il est possible d'obtenir facilement des caoutchoucs thermoplastiques de duretés faibles, inférieures à 60 Shore A, voire inférieures à 55 Shore A, ces caoutchoucs thermoplastiques ayant au surplus leurs autres caractéristiques mécaniques voisines de celles obtenues avec les caoutchoucs vulcanisés traditionnels.

Autrement dit, par l'utilisation en mélange d'une phase caoutchouc réticulé (caoutchouc traditionnel ou caoutchouc thermoplastique) dans un caoutchouc thermoplastique autre, mais cette fois non réticulé, il est possible d'obtenir commmodément un caoutchouc thermoplastique présentant une basse dureté, un bas module et un fluage faible sous contrainte et sous élévation de température.

Naturellement, l'invention n'est pas limitée aux modes de réalisation qui ont été mentionnés et l'on peut concevoir diverses variantes sans sortir pour autant du cadre de ladite invention.

Ainsi, s'il a été choisi le 1.3-bis (tert. butyl peroxy isopropyl) benzène pour réticuler le SBS et le SBR, d'autres systèmes de vulcanisation peuvent être employés, tel le soufre, des donneurs de soufre, une résine phénolique, un isocyanate, pour autant que ces systèmes rétifient le SBS ou le SBR sans rétifier le SEBS.

De même, le caoutchouc traditionnel vulcanisé in situ après mélangeage et dispersion dans le caoutchouc thermoplastique peut, en remplacement du SBR, être par exemple un caoutchouc naturel (NR), le polybutadiène (BR), l'éthylène-propylène (EP), le polychloroprène (CR), le polyéthylène chlorosulfoné, le caoutchouc nitrile ou butadiène-nitrile acrylique (NBR), le polyéthylène chloré, l'éthylène-propylène-diène monomère (EPDM), un caoutchouc acrylique ou un polymère fluoré, cette liste n'étant bien sûr aucunement limitative.

## Revendications

1. Caoutchouc thermoplastique à caractéristiques améliorées, obtenu par mélange de deux caoutchoucs dont l'un est un caoutchouc thermoplastique, caractérisé en ce que ledit caoutchouc thermoplastique est choisi dans le groupe composé du Styrène-Butadiène-Styrène, du Styrène-Ethylène-Butylène-Styrène, du Polyuréthane thermoplastique, du Polyester thermoplastique et du Polyamide thermoplastique, et en ce que le second caoutchouc est soit un caoutchouc traditionnel, soit un second caoutchouc thermoplastique choisi dans le groupe précité, mais alors de nature différente de celle du premier caoutchouc thermoplastique, le caoutchouc traditionnel, ou le second caoutchouc thermoplastique, ayant été finement dispersé dans le premier caoutchouc thermoplastique puis vulcanisé in situ à l'aide d'un agent de vulcanisation inactif vis-à-vis dudit premier caoutchouc thermoplastique.

2. Caoutchouc thermoplastique selon la revendication 1, caractérisé en ce qu'il comprend en mélange un premier caoutchouc thermoplastique, choisi dans le groupe composé du Styrène-Ethylène-Butylène-Styrène, du Polyuréthane thermoplastique, du Polyester thermoplastique et du Polyamide thermoplastique, et soit un caoutchouc traditionnel, soit un Styrène-Butadiène-Styrène, le caoutchouc traditionnel ou le Styrène-Butadiène-Styrène ayant été finement dispersé dans le premier caoutchouc thermoplastique puis vulcanisé in situ à l'aide d'un agent de vulcanisation inactif vis-à-vis dudit premier caoutchouc thermoplastique.

3. Caoutchouc thermoplastique selon l'une des revendications 1 et 2, caractérisé en ce que le caoutchouc traditionnel est choisi dans le groupe composé du caoutchouc naturel, du Styrène-Butadiène, du Polybutadiène, de l'Ethylène-Propylène, du Polychloroprène, du Polyéthylène chlorosulfoné, du caoutchouc Nitrile ou Butadiène-Nitrile-Acrylique, du Polyéthylène chloré, de l'Ethylène-Propylène-Diène monomère, des caoutchoucs acryliques et des polymères fluorés.

4. Caoutchouc thermoplastique selon l'une des revendications 1 et 3, caractérisé en ce qu'il comprend en mélange 20 à 80 parties en poids du premier caoutchouc thermoplastique non vulcanisé et 80 à 20 parties en poids de caoutchouc traditionnel vulcanisé ou du second caoutchouc thermoplastique vulcanisé pour 100 parties en poids au total de caoutchouc.

5. Caoutchouc thermoplastique selon l'une des revendications 1 à 4, caractérisé en ce que le caoutchouc mélangé au premier caoutchouc thermoplastique est du Styrène-Butadiène Rubber ou du Styrène-Butadiène-Styrène et en ce que l'agent de vulcanisation dudit Styrène-Butadiène Rubber ou dudit Styrène-Butadiène-Styrène et du 1.3-bis (tert. butyl peroxy isopropyl) benzène.

6. Caoutchouc thermoplastique selon la revendication 5, caractérisé en ce qu'un activateur tel le triallylcyanurate est associé au 1.3-bis (tert. butyl peroxy isopropyl) benzène.

7. Caoutchouc thermoplastique selon l'une des revendications 1 à 6, caractérisé en ce qu'il comprend une charge renforçante, tel le polypropylène pour le premier caoutchouc thermoplastique, de la silice pour le caoutchouc traditionnel et une résine telle une résine alpha méthylstyrène pour le second caoutchouc thermoplastique.

8. Procédé de fabrication d'un caoutchouc thermoplastique à caractéristiques améliorées, obtenu par mélangeage de deux caoutchoucs dont l'un est un caoutchouc thermoplastique, caractérisé en ce que l'on mélange un premier caoutchouc thermoplastique choisi dans le groupe composé du Styrène-Butadiène-Styrène, du Styrène-Ethylène-Butylène-Styrène, du Polyuréthane thermoplastique, du Polyester thermoplastique et du Polyamide thermoplastique avec soit un caoutchouc traditionnel, soit un second caoutchouc thermoplastique choisi dans le groupe précité mais alors de nature différente de celle du premier caoutchouc thermoplastique, en ce que l'on disperse finement ledit caoutchouc traditionnel ou ledit second caoutchouc thermoplastique dans le premier caoutchouc thermoplastique et en ce que l'on vulcanise in situ ledit caoutchouc traditionnel ou ledit second caoutchouc thermoplastique à l'aide d'un agent de vulcanisation inactif vis-à-vis du premier caoutchouc thermoplastique.

## Patentansprüche

1. Thermoplastischer Kautschuk mit verbesserten Eigenschaften, der durch Mischung zweier Kautschuke erhalten ist, von denen einer ein thermoplastischer Kautschuk ist, dadurch gekennzeichnet, daß der thermoplastische Kautschuk aus der Gruppe ausgewählt ist, die Styrol-Butadien-Styrol, Styrol-Ethylen-Butylen-Styrol, thermoplastisches Polyurethan, thermoplastisches Polyester und thermoplastisches Polyamid umfaßt, und daß der zweite Kautschuk entweder ein herkömmlicher Kautschuck oder ein zweiter thermoplastischer Kautschuk ist, der aus der vorgenannten Gruppe ausgewählt ist, dann jedoch anderer Natur als der erste thermoplastische Kautschuk ist, wobei der herkömmliche Kautschuk oder der zweite thermoplastische Kautschuk in dem ersten thermoplastischen Kautschuk fein verteilt und dann in situ mit Hilfe eines gegenüber dem ersten thermoplastischen Kautschuk inaktiven Vulkanisierungswirkstoffs vulkanisiert worden ist.

2. Thermoplastischer Kautschuk nach Anspruch 1, dadurch gekennzeichnet, daß er in Mischung einen ersten thermoplastischen Kautschuk, der aus der Gruppe ausgewählt ist, die Styrol-Ethylen-Butylen-Styrol, thermoplastisches Polyurethan, thermoplastisches Polyester und thermoplastisches Polyamid umfaßt, und entweder einen herkömmlichen Kautschuk oder ein Styrol-Butadien-Styrol enthält, wobei der traditionalle Kautschuk oder das Styrol-Butadien-Styrol in dem ersten thermoplastischen Kautschuk fein verteilt und anschließend in situ mit Hilfe eines gegenüber dem ersten thermoplastischen Kautschuk inaktiven Vulkanisierungswirkstoffs vulkanisiert worden ist.

3. Thermoplastischer Kautschuk nach einem der Ansprüche 1 und 2, dadurch gekennzeichnet, daß der herkömmliche Kautschuk aus der Gruppe ausgewählt ist, die Naturkautschuk, Styrol-Butadien, Polybutadien, Ethylen-Propylen, Polychloropren, chlorsulfoniertes Polyethylen, Nitril- oder Butatien-Nitril-Akryl-Kautschuk, chloriertes Polyethylen, monomeres Ethylen-Propylen-Dien, Akrylkautschuke und fluorierte Polymere umfaßt.

4. Thermoplastischer Kautschuk nach einem der Ansprüche 1 bis 3, dadurch gekennzeichnet, daß er in Mischung 20 bis 80 Gewichtsteile des ersten thermoplastischen, nicht vulkanisierten Kautschuks und 80 bis 20 Gewichtsteile vulkanisierten herkömmlichen Kautschuks oder vulkanisierten zweiten thermoplastischen Kautschuks in 100 Gesamtgewichtsteilen des Kautschuks enthält.

5. Thermoplastischer Kautschuk nach einem der Ansprüche 1 bis 4, dadurch gekennzeichnet, daß der dem ersten thermoplastischen Kautschuk zugemischte Kautschuk Styrol-Butadien-Gummi oder Styrol-Butadien-Styrol ist, und daß das Vulkanisierungshilfsmittel des Styrol-Butadien-Gummis oder des Styrol-Butatien-Styrols 1,3-bis (tert. Butyl-peroxy-isopropyl-) Benzen ist.

6. Thermoplastischer Kautschuk nach Anspruch 5, dadurch gekennzeichnet, daß ein Aktivator, wie Triallylcyanurat dem 1,3-bis (tert. Butyl-peroxy-isopropyl-) Benzen beigegeben ist.

7. Thermoplastischer Kautschuk nach einem der Ansprüche 1 bis 6, dadurch gekennzeichnet, daß er eine Verstärkungscharge, wie Polypropylen, für den ersten thermoplastischen Kautschuk, Silizium für den herkömmlichen Kautschuk und ein Harz, wie Alpha-Methyl-Styrol-Harz, für den zweiten thermoplastischen Kautschuk enthält.

8. Verfahren zur Herstellung eines thermoplastischen Kautschuks mit verbesserten Eigenschaften, der durch Vermischung zweier Kautschuke erhalten ist, von denen einer ein thermoplastischer Kautschuk ist, dadurch gekennzeichnet, daß man einen ersten thermoplastischen Kautschuk, der aus der Gruppe ausgewählt ist, die Styrol-Butadien-Styrol, Styrol-Ethylen-Butylen-Styrol, thermoplastisches Polyurethan, thermoplastisches Polyester und thermoplastisches Polyamid umfaßt, mit entweder einem herkömmlichen Kautschuk oder einem zweiten thermoplastischen Kautschuk vermischt, der aus der vorgenannten Gruppe ausgewählt ist, dann jedoch anderer Natur als der erste thermoplastische Kautschuk ist, und daß man den herkömmlichen Kautschuk oder den zweiten thermoplastischen Kautschuk in dem ersten thermoplastischen Kautschuk fein verteilt und man den herkömmlichen Kautschuk oder den zweiten thermoplastischen Kautschuk in situ mit Hilfe eines gegenüber dem ersten thermoplastischen Kautschuk inaktiven Vulkanisierungshilfmittels vulkanisiert.

## Claims

1. A thermoplastic rubber with improved characteristics, obtained by mixing two rubbers of which the one is a thermoplastic rubber, characterised in that the said thermoplastic rubber is chosen from the group comprised of styrene-butadiene-styrene, styrene-ethylene-butylene-styrene, thermoplastic polyurethane, thermoplastic polyester and thermoplastic polyamide, and in that the second rubber is either a traditional rubber, or a second thermoplastic rubber chosen from the mentioned group, but of a different nature from that of the first thermoplastic rubber, the traditional rubber or the second thermoplastic rubber, having been finely dispersed in the first thermoplastic rubber then vulcanized in situ with the aid of a vulcanization agent which is inactive with respect to the said first thermoplastic rubber.

2. A thermoplastic rubber according to Claim 1, characterised in that it comprises a mixture of a first thermoplastic rubber chosen from the group comprised of styrene-ethylene-butylene-styrene, thermoplastic polyurethane, thermoplastic polyester and thermoplastic polyamide, and either a traditional rubber or a styrene-butadiene-styrene, the traditional rubber or the styrene-butadiene-styrene having been finely dispersed in the first thermoplastic rubber then vulcanized in situ with the aid of a vulcanization agent which is inactive with respect to the said first thermoplastic rubber.

3. A thermoplastic rubber according to either of Claims 1 and 2, characterised in that the traditional rubber is chosen from the group comprised of natural rubber, styrene-butadiene, polybutadiene, ethylene-propylene, polychloroprene, chlorosulphonated polyethylene, nitrile rubber or acrylic-nitrile butadiene rubber, chlorinated polyethylene, ethylene-propylene-diene monomer, acrylic rubbers and fluorinated polymers.

4. A thermoplastic rubber according to either of Claims 1 and 3, characterised in that it comprises a mixture of 20 to 80 parts by weight of the first non-vulcanized thermoplastic rubber and 80 to 20 parts by weight of traditional vulcanized rubber or of the second thermoplastic vulcanized rubber per 100 parts by weight of the total rubber.

5. A thermoplastic rubber according to any one of claims 1 to 4 characterised in that the mixed rubber of the first thermoplastic rubber is of styrene-butadiene rubber or of styrene-butadiene-styrene and in that the vulcanization agent of the said styrene-butadiene rubber or of the styrene-butadiene-styrene is of 1.3-bis (tert. butyl peroxy isopropyl) benzene.

6. A thermoplastic rubber according to claim 5, characterised in that an activator such as triallylcyanurate is associated with the 1.3-bis (tert. butyl peroxy isopropyl) benzene.

7. A thermoplastic rubber according to any one of claims 1 to 6, characterised in that it comprises a reinforcing load, such as polypropylene for the first thermoplastic rubber, silica for the traditional rubber and a resin such as alpha methylstyrene resin for the second thermoplastic rubber.

8. A method of manufacture of a thermoplastic rubber with improved characteristics, obtained by mixing two rubbers of which the one is a thermoplastic rubber, characterised in that there is mixed a first thermoplastic rubber chosen from the group comprised of styrene-butadiene-styrene, styrene-ethylene-butylene-styrene, thermoplastic polyurethane, thermoplastic polyester and thermoplastic polyamide with either a traditional rubber, or a second thermoplastic rubber chosen in the mentioned group but of a different nature from that of the first thermoplastic rubber, in that the said traditional rubber or the said second thermoplastic rubber is finely dispersed in the first thermoplastic rubber and in that the said traditional rubber or the said second thermoplastic rubber is vulcanized in situ with a vulcanization agent which is inactive with respect to the first thermoplastic rubber.
